# FASCICULE DE BREVET EUROPEEN

(11) **EP 3 717 212 B1**
(45) Date de publication et mention de la délivrance du brevet: **29.09.2021**
(21) Numéro de dépôt: 18819174.6
(22) Date de dépôt: 23.11.2018
(51) Int. Cl.: B29C 70/38, B29C 70/54

(54) **TÊTE D'APPLICATION COMPRENANT UN SYSTÈME DE BLOCAGE A DEUX MORS MOBILES**
AUFTRAGSKOPF MIT EINEM FESTSTELLSYSTEM MIT ZWEI BEWEGLICHEN BACKEN
APPLICATION HEAD COMPRISING AN IMMOBILISING SYSTEM WITH TWO MOVABLE JAWS

(30) Priorité: 27.11.2017 FR 1701247
(43) Date de publication de la demande: 07.10.2020
(73) Titulaire: Coriolis Group, 56530 Quéven (FR)
(72) Inventeur: GAILLARD Loïc, 56600 Lanester (FR); COUDURIER Julien, 56100 Lorient (FR)
(86) Numéro de dépôt international: PCT/FR2018/000256
(87) Numéro de publication internationale: WO 2019/102083

(56) Documents cités:
- EP-A1- 0 846 551
- WO-A1-2017/097818
- FR-A1- 3 011 499

## Description

La présente invention se rapporte à une tête d'application spécialement conçue pour une machine d'application de fibres pour réaliser des pièces en matériaux composites, et plus particulièrement à une tête d'application de fibres équipée d'un système de blocage particulier. La présente invention concerne également un procédé de fabrication de pièces en matériaux composites au moyen d'une tête d'application correspondante.

Il est connu des machines d'application de fibre pour l'application au contact sur un outillage de drapage, tel qu'un moule mâle ou femelle, d'une fibre ou d'une bande large formée d'une ou plusieurs fibres plates continues, de type mèches, sèches ou imprégnées de résine thermodurcissable ou thermoplastique, notamment des fibres de carbone, constituées d'une multitude de fils ou filaments de carbone.

Ces machines d'application de fibre, appelées également machines de placement de fibre, comprennent classiquement une tête d'application, un système de déplacement apte à déplacer la tête d'application, des moyens de stockage pour stocker les fibres et des moyens d'acheminement pour acheminer les fibres des moyens de stockage jusqu'à la tête d'application. Cette dernière comprend classiquement un rouleau d'application pour l'application d'une fibre ou d'une bande formée de plusieurs fibres sur une surface d'application d'un outillage de drapage, un système de guidage pour guider les fibres vers le rouleau d'application, et pour chaque fibre, un système de coupe pour couper une fibre, des moyens de réacheminement pour réacheminer la fibre jusqu'au rouleau d'application après une coupe effectuée par le système de coupe, et un système de blocage pour bloquer la fibre venant d'être coupée.

Chaque système de blocage comprend classiquement un outil et un contre-outil de blocage. Dans certains systèmes de blocage proposés, notamment dans le document WO 2008/132301 ou le document EP 846 551, un mors mobile se déplace en translation entre une position inactive et une position active suivant une direction de blocage et vient en butée dans la position active contre un contre-outil fixe par rapport à la tête ou par rapport à la direction de blocage.

On a constaté que ces systèmes de blocage ne permettaient pas toujours de déterminer avec précision la position dans le plan de guidage, de l'extrémité de la fibre coupée par le système de coupe. Cette imprécision provient du fait que la fibre coupée a tendance à subir un recul dû à l'existence d'une tension de fibre entre les moyens de stockage de la machine d'application ou de placement de fibre et le rouleau de la tête d'application. Ce recul est d'autant plus important que le temps mis par le mors mobile pour se déplacer de la position inactive à la position active est plus grand.

On a également constaté que la fibre déplacée par le mors mobile vers le contre-outil peut présenter une courbure préjudiciable à son application par le rouleau de la tête d'application. Cela peut également perturber leur réacheminement. Par ailleurs, notamment dans le cas d'une fibre pré-imprégnée d'une résine thermodurcissable, la fibre peut rester collée au mors mobile, ou plus fréquemment au contre-outil fixe, après avoir été bloquée dans la position active.

Les documents WO2017/097818 et FR3011499 décrivent une tête d'application équipée d'un système de blocage selon le préambule de la revendication 1.

Le but de l'invention est de proposer une solution visant à pallier au moins l'un des inconvénients précités.

A cet effet, l'invention a pour objet une tête d'application spécialement conçue pour réaliser des pièces en matériaux, conformément à la revendication 1.

Par cet agencement, on obtient une vitesse de blocage élevée. En effet, les deux mors viennent rapidement en butée l'un contre l'autre dans leurs positions actives respectives lorsqu'ils sont mobiles l'un et l'autre en translation suivant la direction de blocage. La tête selon l'invention équipée d'un tel système de blocage facilite la synchronisation du système de coupe et du système de blocage et assure un blocage plus précis de la fibre et ainsi une bonne précision dans le positionnement des extrémités coupées de fibre lors du drapage.

Cet agencement permet avantageusement de bloquer une fibre « au milieu », c'est-à-dire sans déviation par rapport à un plan médian disposé à égale distance des moyens de guidage. On choisira de préférence les positions inactives des deux mors de façon symétrique par rapport au plan médian et on déplacera lesdits mors en sens opposé à une même vitesse de translation pour les faire venir en butée l'un contre l'autre dans ledit plan médian. Par cet agencement on réduit ainsi le risque de déformer la fibre lors du blocage. La tête peut comprendre en outre, de préférence pour chaque fibre, un système de coupe pour couper une fibre, ainsi que de préférence des moyens de réacheminement pour réacheminer une fibre jusqu'au système d'application après une coupe effectuée par le système de coupe.

Selon l'invention, la tête d'application comprend des moyens dévétisseurs fixes suivant la direction de blocage, dans des positions vis-à-vis desquelles les positions inactives des mors sont en retrait. Les moyens dévétisseurs comprennent deux plaques de dévétissage chacune munie d'un trou traversant pour le passage d'un mors, les deux surfaces en vis-à-vis des plaques de dévétissage sont espacées l'une de l'autre et sont dans des positions vis-à-vis desquelles les positions inactives des mors sont en retrait. Les positions inactives des mors en retrait par rapport aux moyens dévétisseurs permettent de décoller facilement une fibre qui serait restée collée aux mors en butée l'un contre l'autre dans leurs positions actives respectives. Ainsi, on réduit voire élimine le risque de coller la fibre sur l'un ou l'autre mors mobiles, en particulier dans le cas de fibres pré-imprégnées. Les mors peuvent être déplacés suivant la direction de blocage par deux moyens de commande respectifs. De préférence, la tête d'application comprend un moyen de commande apte à déplacer les deux mors en translation suivant la direction de blocage.

Un moyen de commande commun permet de réduire l'encombrement du système de blocage dans la tête de d'application. De préférence encore, le moyen de commande comprend un vérin actionnant une tige de vérin coopérant avec les mors par l'intermédiaire d'un cône de transmission ou d'un premier levier et d'un deuxième levier reliés respectivement auxdits mors.

Dans un mode avantageux de réalisation, la tête d'application comprend un deuxième moyen de commande apte à déplacer les mors et les éventuels moyens dévétisseurs, en translation suivant le plan de guidage.

La présente invention a également pour objet un procédé de fabrication d'une pièce en matériau composite conformément à la revendication 5.

Les fibres classiquement utilisées sont des fibres plates continues, appelées également mèches, généralement unidirectionnelles, et comprenant une multitude de filaments. Les fibres déposées peuvent être des fibres sèches ou des fibres pré-imprégnées de résine thermodurcissable ou thermoplastique. Les fibres présentent typiquement des largeurs de 1/8, 1/4 ou 1/2 pouces. Dans la présente, le terme «fibre » désigne également des fibres de plus grande largeur, supérieure à 1/2 pouce, classiquement appelée bande dans la technologie du placement, par exemple de 1 pouce, 1,5 pouce ou 2 pouces. 1 pouce correspond à 2.54 cm.

D'autres avantages de l'invention apparaîtront à la lumière de la description de modes d'exécution illustrés par les dessins.
La Fig. 1 est une vue schématique du système de blocage selon un premier mode de réalisation de l'invention, illustrant les mors dans une position initiale suivant un plan de guidage et dans deux positions inactives suivant une direction de blocage.
La Fig. 2 est une vue schématique du système de blocage, illustrant les mors dans la position initiale suivant le plan de guidage et dans deux positions actives suivant la direction de blocage.
La Fig. 3 est une vue schématique du système de blocage, illustrant les mors dans une position finale suivant le plan de guidage et dans les positions actives suivant la direction de blocage.
La Fig. 4 est une vue schématique du système de blocage, illustrant les mors dans la position finale suivant le plan de guidage et dans les positions inactives suivant la direction de blocage.
La Fig. 5 est une vue schématique du système de blocage selon une variante de réalisation, illustrant les mors dans la position initiale suivant le plan de guidage et dans les positions inactives suivant la direction de blocage.
La Fig. 6 est une vue schématique du système de blocage de la figure 5, illustrant les mors dans la position initiale suivant le plan de guidage et dans les positions actives suivant la direction de blocage.
La Fig. 7 est une vue schématique d'une tête d'application, illustrant un système de coupe et le système blocage dans des positions initiales suivant le plan de guidage.
La Fig. 8 est une vue schématique de la tête d'application, dans laquelle des lames du système de coupe se sont déplacées dans une position finale dans le plan de guidage.
La Fig. 9 est une vue schématique de la tête d'application, dans laquelle les mors se sont déplacés dans une position finale dans le plan de guidage.
La Fig. 10 est une vue schématique de la tête d'application, dans laquelle les lames du système de coupe sont à nouveau dans la position initiale dans le plan de guidage.

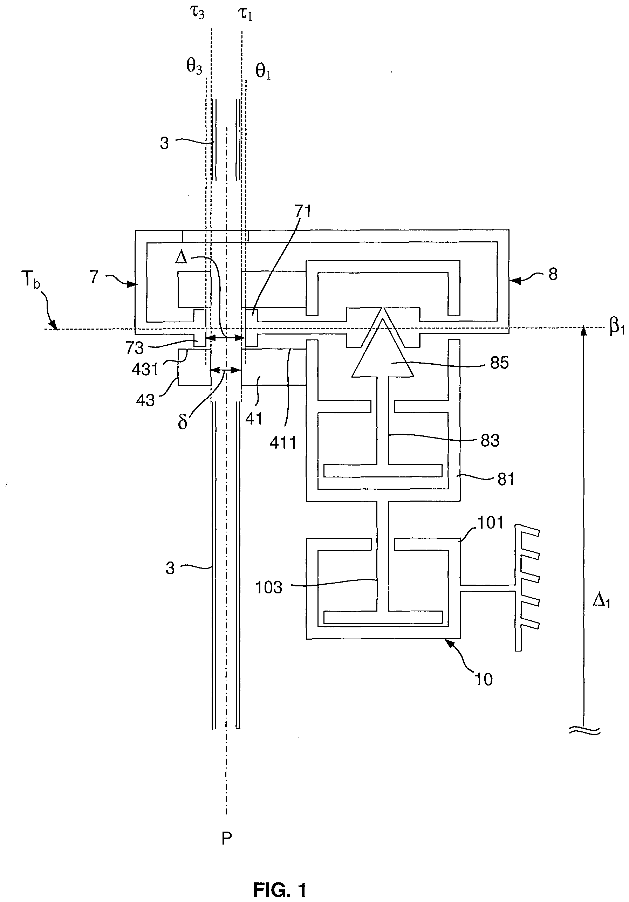

Selon un premier mode d'exécution de l'invention, illustré par les figures 1 à 4, une tête d'application comprend un rouleau d'application 1, et pour chaque fibre, des moyens de guidage 3 définissant un plan de guidage P pour guider la fibre entrant dans la tête selon un plan de guidage en direction du rouleau, et un système de blocage 7.

Les moyens de guidage d'une fibre sont par exemple formés d'un canal de guidage formé à l'interface d'assemblage de deux plaques, le plan de guidage correspondant à un plan longitudinal médian du canal. Lorsque la tête est prévue pour l'application d'une bande de plusieurs fibres, la tête comprend un canal de guidage par fibre et un système de coupe par fibre, et peut comprendre un seul rouleau pour appliquer toutes les fibres, ou plusieurs rouleaux, par exemple un rouleau pour chaque fibre. D'autres moyens de guidage peuvent comprendre des tronçons de tube ou une ou plusieurs poulies.

Le système de blocage 7 comprend des premier et deuxième outils de blocage 71, 73 mobiles suivant une direction de blocage T_{b} entre deux positions inactives θ₁, θ₃ et deux positions actives θ₂, θ₄ où ils sont en butée l'un contre l'autre. Lesdits outils de blocage comprennent un premier et un deuxième mors ou plot. Un moyen de commande 8 est apte à déplacer les premier et deuxième mors 71, 73 en translation suivant la direction de blocage T_{b.} Il comprend un vérin 81 de type à pinces parallèles, actionnant une tige de vérin 83 coopérant avec les premier et deuxième outils de blocage 71, 73 par l'intermédiaire d'un cône de transmission 85.

Lesdits outils de blocage 71, 73 sont mobiles ensemble en translation entre deux positions de blocage initiale β₁ et finale β₂ représentant une variation de distance suivant le plan de guidage P. Ils sont déplacés par un moyen de commande 10 comprenant un vérin 101 actionnant une tige de vérin 103 apte à déplacer le vérin 81 du moyen de commande 8.

Des moyens dévétisseurs 41, 43 sont fixes par rapport à une structure servant de support au montage de la tête d'application et donc fixes l'un par rapport à l'autre suivant la direction de blocage T_{b}. Les positions inactives θ₁, θ₃ des premier 71 et deuxième 73 mors sont en retrait suivant la direction de blocage T_{b} par rapport aux positions fixes des moyens dévétisseurs 41, 43. Les moyens dévétisseurs 41, 43 sont mobiles avec lesdits mors 71, 73 en translation suivant le plan de guidage P.

Figure 1, les deux mors 71, 73 sont dans leur position initiale β₁ suivant le plan de guidage P et sont dans leurs positions inactives θ₁, θ₃ suivant la direction de blocage T_{b}, en retrait par rapport aux positions τ₁, τ₃ des moyens dévétisseurs 41, 43. Le retrait tient au fait que les moyens dévétisseurs sont distants d'une distance δ inférieure à la distance Δ entre lesdites positions inactives θ₁, θ₃ desdits mors 71, 73 suivant la direction de blocage T_{b}. Les moyens dévétisseurs comprennent une première plaque de dévétissage 41 munie d'un trou traversant 411 pour le passage du premier mors 71 et une deuxième plaque de dévétissage 43 munie d'un trou traversant 431 pour le passage du deuxième mors 73. Les deux plaques de dévétissage, parallèles entre elles, sont montées fixes sur le corps du vérin, les deux surfaces en vis-à-vis des plaques de dévétissage sont dans les positions τ₁, τ₃ et sont espacées l'une de l'autre de la distance δ.

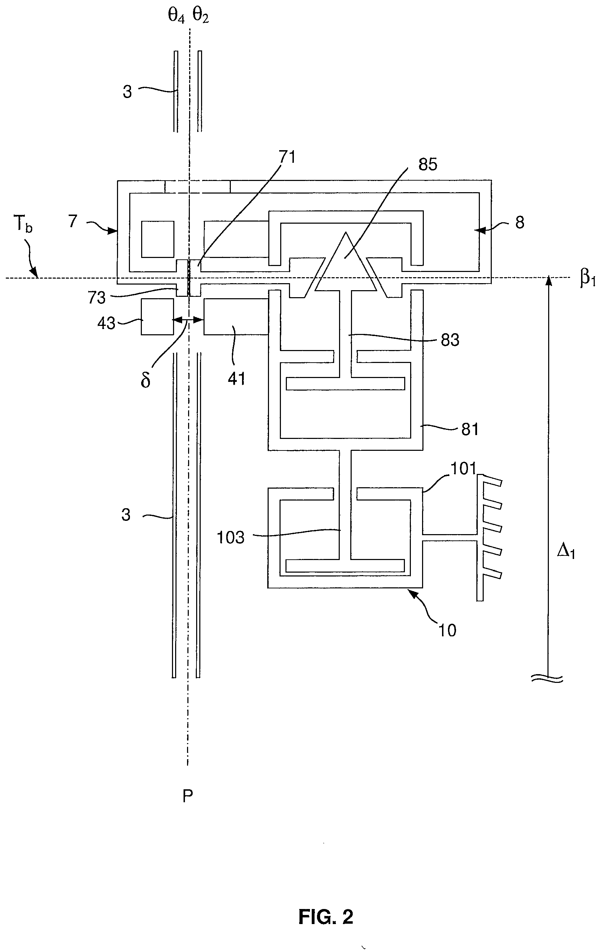

Figure 2, les deux mors 71, 73 sont restés dans la position initiale β₁ illustrée par la figure 1 mais se sont déplacés, suivant la direction de blocage T_{b}, de leurs positions inactives θ₁, θ₃ aux positions actives θ₂, θ₄ pour lesquelles ils sont en butée l'un contre l'autre.

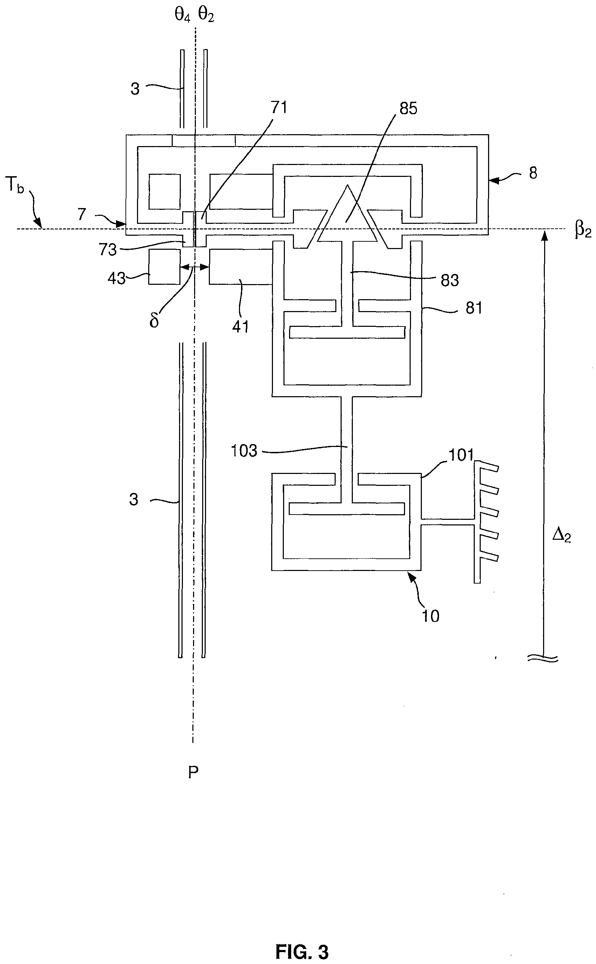

Figure 3, les deux mors 71, 73 se sont déplacés dans leur position finale β₂ suivant le plan de guidage pour laquelle la distance suivant le plan de guidage entre la direction de blocage T_{b} et la position fixe des moyens de réacheminement est égale à Δ. Les moyens dévétisseurs 41, 43 se sont également déplacés en bloc avec les mors 71, 73 en translation suivant le plan de guidage P.

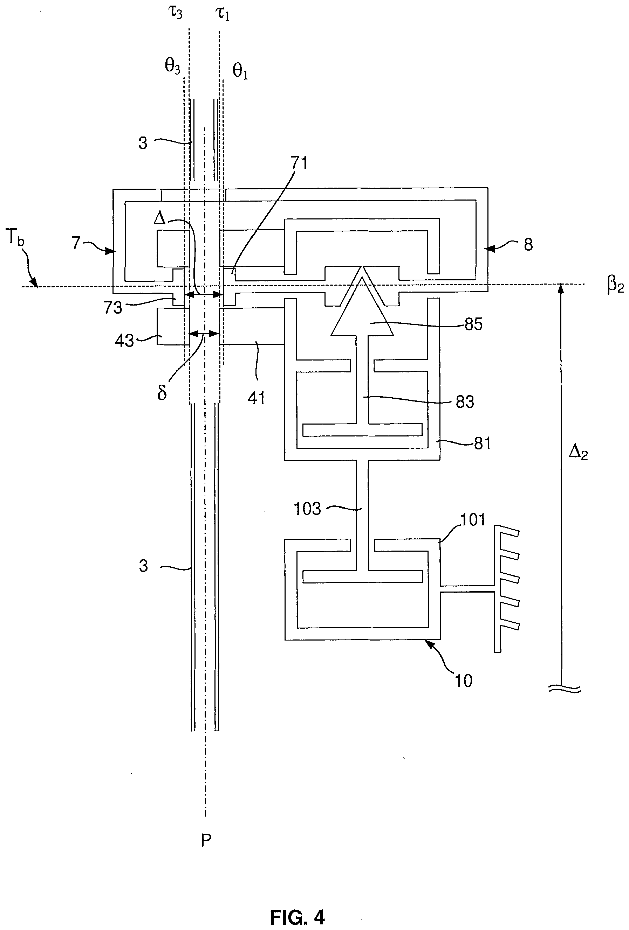

Figure 4, les deux mors 71, 73 sont restés dans la position finale β₂ illustrée par la figure 3 mais se sont déplacés, suivant la direction de blocage T_{b}, de leurs positions actives θ₂, θ₄ aux positions inactives θ₁, θ₃ pour lesquelles ils sont en retrait vis-à-vis des positions τ₁, τ₃ des moyens dévétisseurs 41, 43.

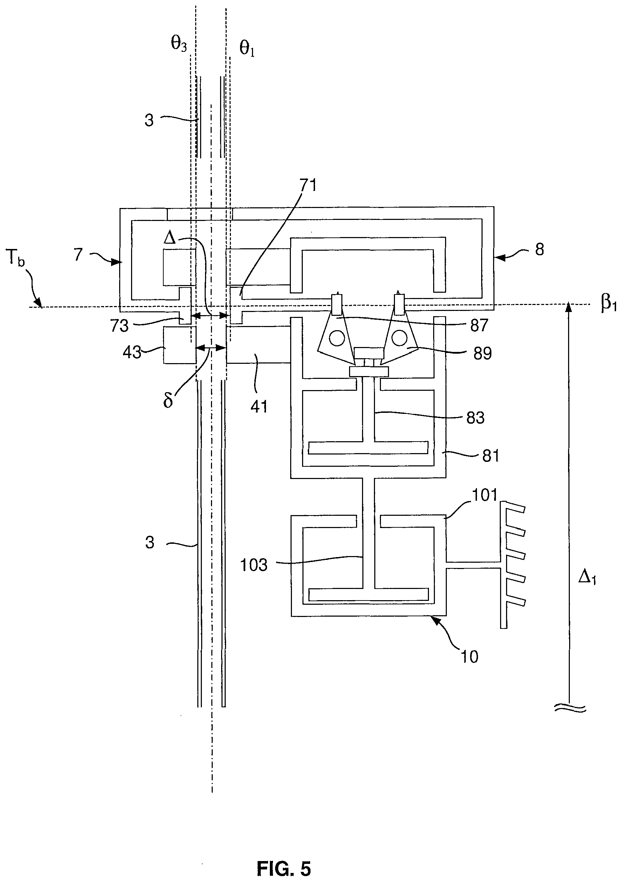

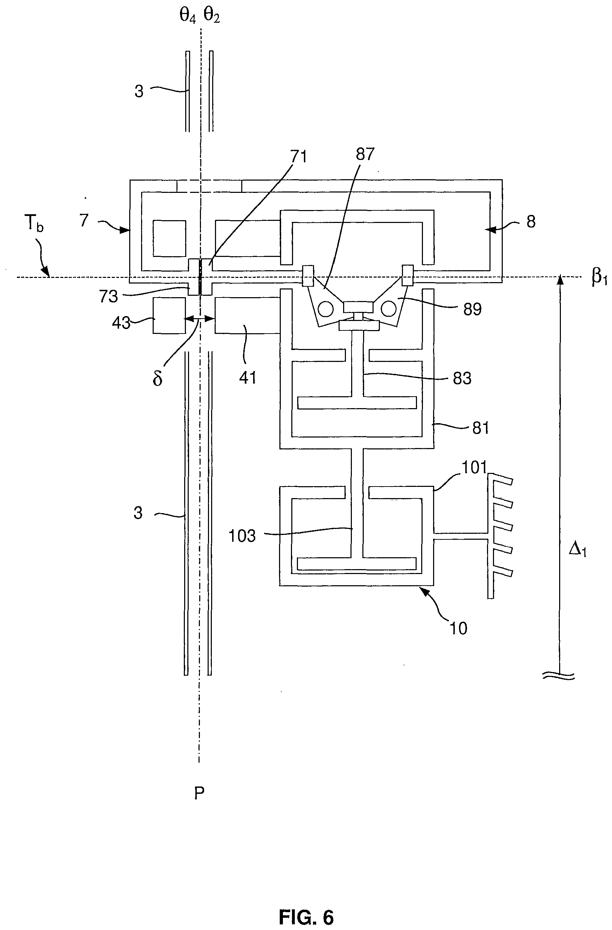

Une variante de réalisation du moyen de commande 8 des moyens de blocage 71, 73 tient en ce que la tige 83 du vérin 81 coopère avec les premier et deuxième mors 71, 73 par l'intermédiaire de premier 87 et deuxième 89 leviers articulés auxdits mors. Le vérin 81 est un vérin de type à pinces parallèles. Il permet avantageusement des démultiplier les efforts de blocage. Figure 5, la tige 83 est en position rentrée et commande les mors 71, 73 dans leurs positions inactives θ₁, θ₃ suivant la direction de blocage T_{b}. Figure 6, la tige 83 est en position sortie et commande les mors 71, 73 dans leurs positions actives θ₂, θ₄ suivant la direction de blocage T_{b.}

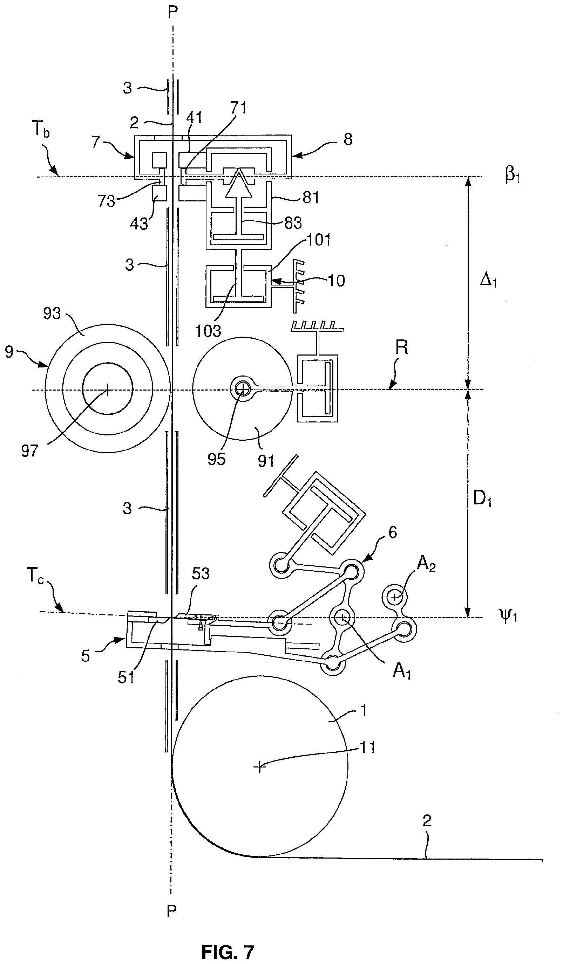

La tête d'application selon l'invention est spécialement conçue pour être installée dans une machine de placement de fibres pour la réalisation de pièces en matériaux composites. Elle est complétée, figures 7 à 10, pour chaque fibre par un système de coupe 5 et des moyens de réacheminement 9.

Le système de coupe 5 comprend des première et deuxième lames 51, 53 mobiles en translation suivant une direction de coupe T_{c} entre deux positions inactives et deux positions actives. Lesdites lames 51, 53 sont mobiles ensemble entre deux positions de coupe initiale ψ₁ et finale ψ₂ représentant une variation de distance suivant le plan de guidage P.

Un moyen de commande intégré 6 est apte à déplacer les première et deuxième lames 51, 53 en translation suivant la direction de coupe T_{c} et à les déplacer ensemble entre les positions de coupe initiale ψ₁ et finale ψ₂, en rotation autour d'une direction parallèle à l'axe de rotation 11 du rouleau d'application 1, ledit moyen de commande intégré étant apte à déplacer les lames entre leurs positions inactives et initiale et leurs positions actives et finale.

Le moyen de commande intégré comprend un levier de commande 61 mobile autour d'un premier axe de rotation A₁ et pourvu d'un premier 63 et d'un deuxième 65, 66 bras de levier. Un premier porte-lame 57 porteur de la première lame 51 est articulé au premier bras de levier 63. Un deuxième porte-lame 59 porteur de la deuxième lame 53 est articulé au deuxième bras de levier 65, 66 par l'intermédiaire d'une biellette 69. Le levier 61 est commandé en déplacement par la tige 67 d'un vérin, articulée au deuxième bras de levier 65, 66. Le premier porte-lame 57 est articulé à un deuxième axe de rotation A₂ par l'intermédiaire d'une biellette 60 et lesdits premier et deuxième porte-lames 57, 59 étant reliés entre eux par un moyen de liaison 68 en coulissement suivant la direction de coupe.

Les axes de rotation A₁ et A₂ sont fixes par rapport à une structure support de la tête d'application le vérin étant monté fixe par son corps de vérin à ladite structure support. A noter que la liaison entre la tige 67 du vérin et la biellette intermédiaire 66 possède un jeu, par exemple sous la forme d'une lumière oblongue. En variante, le vérin est monté avec un jeu par rapport à la structure support de montage.

Les moyens de réacheminement 9 comprennent un premier galet 91 et un deuxième galet 93 dont les axes de rotation 95 et 97 sont alignés suivant une direction R distante de l'axe de rotation 11 du rouleau d'application 1. Lesdits moyens de réacheminement 9 occupent une position fixe par rapport au rouleau d'application 1, entre les lames 51, 53 d'une part et les mors 71, 73 d'autre part.

Figure 7, les deux lames 51, 53 sont dans leur position initiale ψ₁ pour laquelle la distance suivant le plan de guidage P entre la direction de coupe T_{c} et la position fixe de moyens de réacheminement est égale à D₁. De même, les deux mors 71, 73 sont dans leur position initiale β₁ pour laquelle la distance suivant le plan de guidage P entre la direction de blocage T_{b} et la position fixe des moyens de réacheminement est égale à Δ₁. Suivant la direction de coupe T_{c}, les lames 51, 53 sont dans leurs positions inactives. Suivant la direction de blocage T_{b}, les mors 71, 73 sont dans leurs positions inactives θ₁, θ₃ (figure 1).

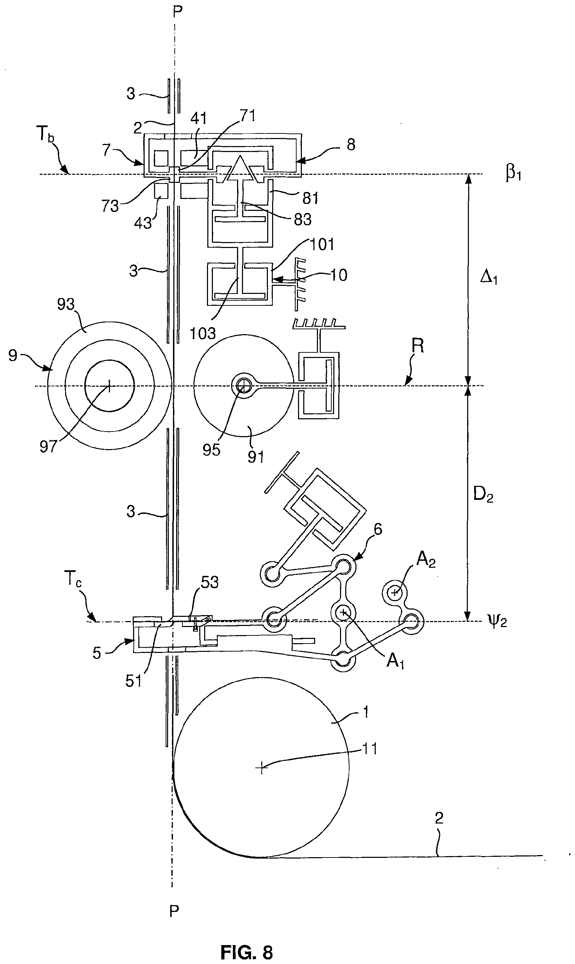

Figure 8, les deux lames 51, 53 se sont déplacées ensemble dans leur position finale ψ₂ pour laquelle la distance suivant le plan de guidage P entre la direction de coupe T_{c} et la position fixe de moyens de réacheminement est égale à D₂. Les deux mors 71, 73 sont restés dans la position initiale β₁ illustrée par la figure 7. Suivant la direction de coupe T_{c}, les lames 51, 53 se sont déplacées dans leurs positions actives. Suivant la direction de blocage T_{b}, les mors 71, 73 se sont déplacés dans leurs positions actives θ₂, θ₄ (figure 2).

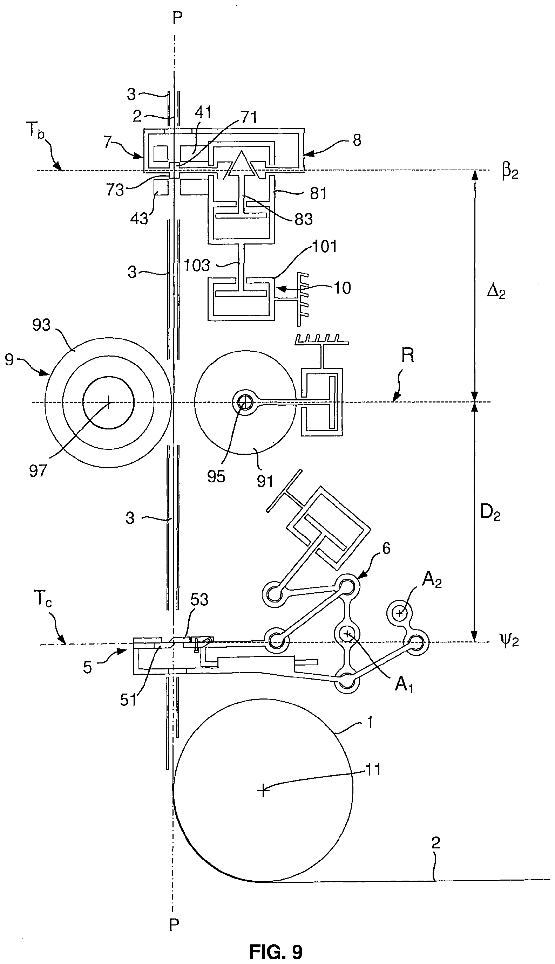

Figure 9, les deux lames 51, 53 sont restées dans leur position finale ψ₂ illustrée par la figure 8. Les deux mors 71, 73 se sont déplacés ensemble dans leur position finale β₂ pour laquelle la distance suivant le plan de guidage entre la direction de blocage T_{b} et la position fixe des moyens de réacheminement est égale à Δ₂.

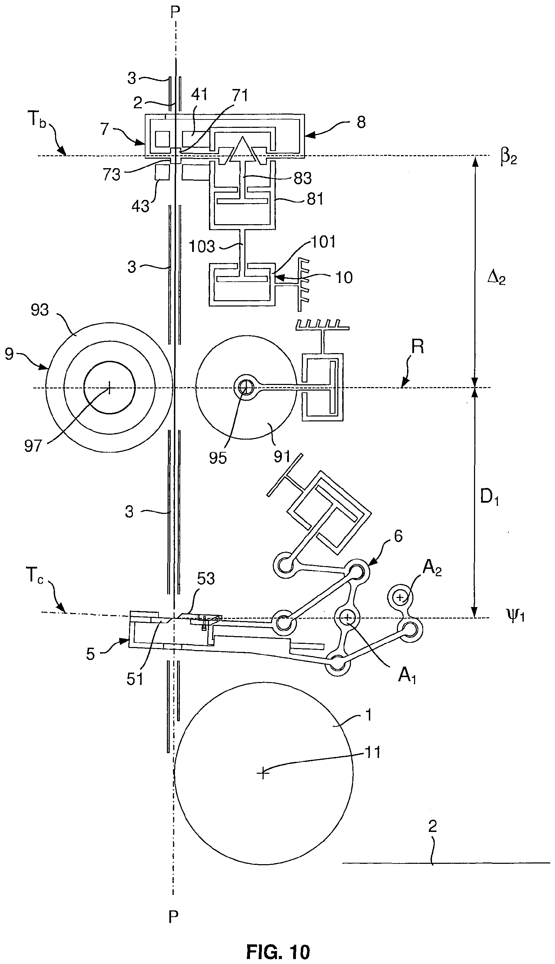

Figure 10, les deux lames 51, 53 se sont déplacées ensemble dans leur position initiale ψ₁ illustrée par la figure 7. Les deux mors 71, 73 sont restés dans leur position finale β₂ illustrée par la figure 9. Suivant la direction de coupe T_{c}, les lames 51, 53 se sont déplacées dans leurs positions inactives.

Les distances initiales D₁ et Δ₁ sont inférieures aux distances finales D₂ et Δ₂. Ainsi, les positions de coupe initiale ψ₁ et finale ψ₂ représentent une variation positive de distance D₂ - D₁ suivant le plan de guidage P et les positions de blocage initiale β₁ et finale β₂ représentent une variation positive de distance Δ₂ - Δ₁ suivant le plan de guidage P.

Il importe de noter que la direction R des moyens de réacheminement est une référence arbitraire pour repérer les distances D₁, Δ₁, D₂ et Δ₂. La direction perpendiculaire au plan de guidage P et passant par l'axe 11 du rouleau d'application 1 est une autre référence arbitraire qui permet de repérer lesdites distances. Il suffit que la direction de référence soit perpendiculaire au plan de de guidage et occupe une position fixe dans la tête d'application.

Une fibre 2 est appliquée sur un support (non représenté) par le rouleau d'application 1 au fur et à mesure du déplacement de la tête d'application par rapport audit support. La fibre est guidée par les éléments de guidage dans le plan de guidage P.

Une opération de « coupe à la volée » comprend les étapes suivantes :
- première étape : figure 7, en cours de drapage, la fibre 2 circule librement à travers les lames 51, 53 et les mors 71, 73. Les positions inactives des lames définissent un état au repos suivant la direction de coupe T_{c}. De même, les positions inactives θ₁, θ₃ des mors définissent un état au repos suivant la direction de blocage T_{b}.
- deuxième étape : figure 8, la fibre 2 est coupée par les lames 51, 53 et bloquée par les mors 71, 73. Les positions actives des lames définissent un état actif suivant la direction de coupe T_{c}. De même, les positions actives θ₂, θ₄ des mors définissent un état actif suivant la direction de blocage T_{b}.

Entre les première et deuxième étapes, les lames ont subi, suivant le plan de guidage P la variation positive de distance D₂ - D₁. Cette variation permet de déplacer la direction de coupe T_{c} en même temps que la fibre 2 et conduit ainsi à annuler l'inclinaison de l'extrémité coupée de ladite fibre.

Les positions inactives θ₁, θ₃ suivant la direction de blocage T_{b} sont avantageusement choisies de façon symétrique par rapport au plan de guidage P. Les mors 71, 73 sont déplacés vers leurs positions actives θ₂, θ₄ à une même vitesse de translation. Ainsi, on parvient à bloquer la fibre 2 « au milieu », c'est-à-dire sans déviation par rapport au plan de guidage P.
- troisième étape : figure 9, les lames 51, 53 restent dans l'état actif. De même, les outils de blocage 71, 73 restent dans l'état actif.

Entre les deuxième et troisième étapes, les mors 71, 73 ont subi, suivant le plan de guidage P, la variation positive de distance Δ₂ - Δ₁. Cette variation permet de déplacer la fibre 2 coupée et bloquée, en sens contraire au sens de défilement imposé par le sens de rotation du rouleau d'application 1.
- quatrième étape : figure 10, les lames 51, 53 sont à nouveau dans l'état au repos. Les mors 71, 73 restent dans l'état actif.

Entre les troisième et quatrième étapes, les lames 51, 53 ont subi, suivant le plan de guidage P, la variation négative de distance D₁ - D₂. La variation de distance Δ₂ - Δ₁ des mors 71, 73 est choisie supérieure à la variation de distance D₂ - D₁ des lames pour permettre le retour de ces derniers à la distance D₁ des moyens de réacheminement 9 sans risquer d'entrer en contact avec la fibre 2.
- cinquième étape : les mors 71, 73 sont à nouveau dans l'état au repos. Les lames 51, 53 restent dans l'état au repos. La fibre 2 circule librement après avoir été réacheminée par les moyens de réacheminement.

Entre la cinquième étape et la première étape de la prochaine coupe à la volée, les mors 71, 73 subiront, suivant le plan de guidage P, la variation négative de distance Δ₁ - Δ₂.

L'opération de coupe « à la volée » décrite ci-dessus peut être exécutée avec une tête d'application dans laquelle un seul des deux outils de coupe est mobile en translation suivant la direction de coupe, l'autre outil occupant une position fixe suivant ladite direction. Le document WO 2008/132301 décrit par exemple une lame mobile venant, dans la position active, en butée contre un contre-outil fixe suivant la direction de coupe, formé d'une barre en matériau élastomère.

## Revendications

1. Tête d'application spécialement conçue pour réaliser des pièces en matériaux composites, comprenant un système d'application (1), des moyens de guidage (3) définissant un plan de guidage (P) et un système de blocage (7) pour bloquer une fibre (2) guidée par les moyens de guidage (3) et appliquée par le système d'application (1), le système de blocage (7) comprenant un premier mors (71) mobile en translation suivant une direction de blocage (Tb) entre une position (θ₁) inactive et une position active (θ₂), et un deuxième mors (73) mobile en translation suivant la direction de blocage (Tb) entre une position inactive(θ₃) et une position active (θ₄), les premier et deuxième mors (71, 73) étant en butée l'un contre l'autre dans leurs positions actives respectives (θ₂, θ₄) **caractérisée en ce qu'**elle comprend des moyens dévétisseurs (41, 43) fixes suivant la direction de blocage (Tb) dans des positions (τ₁, τ₃) vis-à-vis desquelles les positions inactives des mors (71, 73) sont en retrait, les moyens dévétisseurs comprennent deux plaques de dévétissage (41, 43) chacune munie d'un trou traversant (411, 431) pour le passage d'un mors (71, 73), les deux surfaces en vis-à-vis des plaques de dévétissage sont espacées l'une de l'autre et sont dans des positions (τ₁, τ₃) vis-à-vis desquelles les positions inactives (θ₁, θ₃) des mors sont en retrait.

2. Tête d'application selon la revendication 1, **caractérisée en ce qu'**elle comprend un moyen de commande (8) apte à déplacer les deux mors (71, 73) en translation suivant la direction de blocage (Tb).

3. Tête d'application selon la revendication 2, **caractérisée en ce que** le moyen de commande (8) comprend un vérin (81) actionnant une tige de vérin (83) coopérant avec les mors (71, 73) par l'intermédiaire d'un cône de transmission (85) ou d'un premier levier (87) et d'un deuxième levier (89) reliés respectivement auxdits mors (71, 73).

4. Tête d'application selon la revendication 2 ou 3, **caractérisée en ce qu'**elle comprend un deuxième moyen de commande (10) apte à déplacer ensemble les mors (71, 73), en translation suivant le plan de guidage (P).

5. Procédé de fabrication d'une pièce en matériau composite comprenant l'application de fibres continues sur une surface d'application, **caractérisé en ce que** l'application de fibres est réalisée au moyen d'une tête d'application de fibres selon l'une des revendications 1 à 4, par déplacement relatif de la tête d'application par rapport à la surface de drapage selon des trajectoires de dépose.

## Patentansprüche

1. Auftragskopf, der speziell konstruiert ist, um Teile aus Verbundmaterialien herzustellen, umfassend ein Auftragssystem (1), Führungsmittel (3), die eine Führungsebene (P) definieren und ein Feststellsystem (7), um eine von den Führungsmitteln (3) geführte und von dem Auftragssystem (1) aufgetragene Faser (2) festzustellen, wobei das Feststellsystem (7) eine erste Backe (71) umfasst, die gemäß einer Feststellrichtung (Tb) zwischen einer inaktiven Position (θ₁) und einer aktiven Position (θ₂) translatorisch beweglich ist, und eine zweite Backe (73), die gemäß der Feststellrichtung (Tb) zwischen einer inaktiven Position (θ₃) und einer aktiven Position (θ₄) translatorisch beweglich ist, wobei die erste und zweite Backe (71, 73) in ihren jeweiligen aktiven Positionen (θ₂, θ₄) aneinander in Anschlag sind, **dadurch gekennzeichnet, dass** er Abstreifermittel (41, 43) umfasst, die gemäß der Feststellrichtung (Tb) in Positionen (τ₁, τ₃) fest sind, denen gegenüber die inaktiven Positionen der Backen (71, 73) zurückgezogen sind, wobei die Abstreifermittel zwei Abstreiferplatten (41, 43) umfassen, von denen jede mit einem Durchgangsloch (411, 412) für den Durchgang einer Backe (71, 73) ausgestattet ist, wobei die zwei Flächen gegenüber den Abstreiferplatten voneinander beabstandet sind und in Positionen (τ₁, τ₃) sind, denen gegenüber die inaktiven Positionen (θ₁, θ₃) der Backen zurückgezogen sind.

2. Auftragskopf nach Anspruch 1, **dadurch gekennzeichnet, dass** er ein Steuermittel (8) umfasst, das imstande ist, die zwei Backen (71, 73) gemäß der Feststellrichtung (Tb) translatorisch zu verlagern.

3. Auftragskopf nach Anspruch 2, **dadurch gekennzeichnet, dass** das Steuermittel (8) einen Zylinder (81) umfasst, der eine Zylinderstange (83) betätigt, die mit den Backen (71, 73) über einen Übertragungskonus (85) oder einen ersten Hebel (87) und einen zweiten Hebel (89) zusammenwirkt, die jeweils mit den Backen (71, 73) verbunden sind.

4. Auftragskopf nach Anspruch 2 oder 3, **dadurch gekennzeichnet, dass** er ein zweites Steuermittel (10) umfasst, das imstande ist, die Backen (71, 73) gemeinsam gemäß der Führungsebene (P) translatorisch zu verlagern.

5. Verfahren zur Herstellung eines Teils aus Verbundmaterial, umfassend das Auftragen von kontinuierlichen Fasern auf eine Auftragsfläche, **dadurch gekennzeichnet, dass** das Auftragen von Fasern mittels eines Faser-Auftragskopfs nach einem der Ansprüche 1 bis 4 durch relatives Verlagern des Auftragskopfs in Bezug auf die Drapierfläche gemäß Ablagewegen durchgeführt wird.

## Claims

1. Application head especially designed for producing composite material parts, comprising an application system (1), guiding means (3) defining a guiding plane (P) and a clamping system (7) for clamping a fiber (2) guided by the guiding means (3) and applied by the application system (1), the clamping system (7) comprising a first jaw (71) movable in translation in a clamping direction (Tb) between an inactive position (θ₁) and an active position (θ₂), and a second jaw (73) movable in translation in the clamping direction (Tb) between an inactive position (θ₃) and an active position (θ₄), the first and second jaws (71, 73) being in abutment against each other in their respective active positions (θ₂, θ₄), **characterized in that** it comprises stripper means (41, 43) fixed in the clamping direction (Tb) in positions (τ₁, τ₃) with respect to which the inactive positions of the jaws (71, 73) are set back, the stripper means comprise two stripping plates (41, 43) each provided with a through hole (411, 431) for the passage of a jaw (71, 73), the two facing surfaces of the stripping plates are spaced apart from each other and are in positions (τ₁, τ₃) with respect to which the inactive positions (θ₁, θ₃) of the jaws are set back.

2. Application head according to claim 1, **characterized in that** it comprises a control means (8) able to displace the two jaws (71, 73) in translation along the clamping direction (Tb).

3. Application head according to claim 2, **characterized in that** the control means (8) comprises a cylinder (81) actuating a cylinder rod (83) cooperating with the jaws (71, 73) by means of a transmission cone (85) or a first lever (87) and a second lever (89) connected respectively to said jaws (71, 73).

4. Application head according to claim 2 or 3, **characterized in that** it comprises a second control means (10) able to displace the jaws (71, 73) together in translation along the guiding plane (P).

5. Method for manufacturing a composite material part comprising the application of continuous fibers to an application surface, **characterized in that** the application of fibers is carried out by means of a fiber application head according to one of claims 1 to 4, by relative displacement of the application head with respect to the layup surface along layup trajectories.
